# FASCICULE DE BREVET EUROPEEN

(11) **EP 3 690 686 B1**
(45) Date de publication et mention de la délivrance du brevet: **04.08.2021**
(21) Numéro de dépôt: 19217576.8
(22) Date de dépôt: 18.12.2019
(51) Int. Cl.: G06F 21/34, G06F 21/35, G06F 21/44, G06F 21/64, G07D 7/004, G07F 7/12, G06Q 20/34, G06Q 20/36, G06Q 20/40, G07F 7/08, G07F 7/10

(54) **PROCÉDÉ D'AUTHENTIFICATION, SERVEUR ET DISPOSITIF ÉLECTRONIQUE D'IDENTITÉ**
AUTHENTIFIZIERUNGSVERFAHREN, SERVER UND ELEKTRONISCHE IDENTITÄTSVORRICHTUNG
AUTHENTICATION PROCEDURE, SERVER AND ELECTRONIC IDENTITY DEVICE

(30) Priorité: 01.02.2019 FR 1901001
(43) Date de publication de la demande: 05.08.2020
(73) Titulaire: Idemia Identity & Security France, 92400 Courbevoie (FR)
(72) Inventeur: MERCIER, Laurent, 92400 COURBEVOIE (FR); HEURTIER, Olivier, 92400 COURBEVOIE (FR); BONI, Laurent, 92400 COURBEVOIE (FR); KERAUTRET, Laurent, 92400 COURBEVOIE (FR)
(74) Mandataire: Regimbeau

(56) Documents cités:
- EP-A1- 3 206 192
- WO-A1-2016/183338
- FR-A1- 3 038 418

## Description

### DOMAINE DE L'INVENTION

L'invention concerne un procédé d'authentification d'un dispositif électronique d'identité présenté par un individu.

### ETAT DE LA TECHNIQUE

La détention d'un document d'identité (carte d'identité, passeport, permis de conduire, carte de sécurité sociale, etc.) en cours de validité justifie de l'identité d'un individu auprès d'une autorité.

Les documents d'identité consistent en un support généralement en papier ou en plastique sur lequel sont imprimées une photo ainsi que des informations alphanumériques personnelles (nom, prénom, date de naissance, etc.) de son détenteur. On trouve également une bande appelée MRZ (Machine-Readable Zone, Zone de lecture optique), qui contient un code (généralement deux lignes de 36 caractères) résumant les informations alphanumériques du document.

Généralement, les documents d'identité présentent un grand nombre d'éléments de sécurité de haut niveau tels des filigranes ou des hologrammes pour prévenir la falsification. La durée de vie d'un tel document est généralement limitée (10 ou 15 ans), car l'apparence de son possesseur change progressivement, et les éléments de sécurité évoluent.

Ainsi, les documents d'identité originaux apportent satisfaction et s'avèrent très difficiles à contrefaire parfaitement, mais une difficulté se pose lorsque l'on en fait des copies.

En effet, de très nombreux tiers tels que des hôtels, des banques, des services de transports, etc., demandent occasionnellement un scan ou une photocopie d'un document d'identité par sécurité (par exemple pour récupérer une voiture de location).

Cela fait que sur la durée de vie d'un document d'identité, vont exister des centaines de copies de celui-ci, qui s'avèrent bien plus facilement falsifiables que l'original puisque ne permettant pas de contrôler les éléments de sécurité. Et on ne peut pas exclure que certaines de ces copies trainent dans des endroits accessibles comme sur un guichet ou sur un serveur non sécurisé.

En d'autres termes, le risque existe qu'un tiers mal intentionné récupère une photocopie de votre passeport, et modifie celle-ci de sorte à mettre sa photo à la place de la votre et usurpe votre identité pour ouvrir un compte bancaire, et ce peut-être des années après que cette photocopie a été faite.

On note que la MRZ, qui apparait sur les copies, permet uniquement une lecture informatisée plus rapide (cela permet d'extraire directement les informations alphanumériques plutôt que de les retaper à la main), mais ne constitue pas un moyen de prouver la validité ou l'authenticité du document d'identité. De surcroit, la MRZ est aussi facile à falsifier sur une copie que la photo.

Pour résoudre ces difficultés, il a été proposé de rendre les documents d'identité électroniques, en embarquant un microprocesseur. Typiquement, on utilise à présent un support de type carte à puce, stockant dans son microprocesseur les données du document d'identité :
- La photo numérisée ;
- Tout ou partie des données alphanumériques imprimées sur la carte ;
- Un ou plusieurs certificats d'authentification (typiquement RSA, pour signature électronique).

Une lecture de la carte à puce (éventuellement sans contact) remplace alors avantageusement la fourniture d'une copie : par exemple, au guichet de la banque, au lieu de laisser une photocopie on s'authentifie en insérant la carte dans le lecteur, et les informations sont directement transmises au système d'information de la banque.

Une telle solution apporte satisfaction, mais reste conditionnée à la présence d'un lecteur. De surcroit, elle ne peut pas être mise en oeuvre à distance, et il reste nécessaire dans ce cas de transmettre un scan (soit en l'envoyant par e-mail, sont en l'uploadant sur un serveur).

Plus récemment il a été proposé dans la demande EP3206192 un mécanisme très astucieux de génération à partir d'un élément visuel d'un document d'identité (en particulier la photo) d'une donnée de sécurité appelée « Digital Photo Seal ». Cette donnée de sécurité constitue une sorte d'empreinte de l'élément visuel : des images acquises d'un même élément visuel, quelles que soient les conditions d'acquisition (i.e. y compris suite à scan ou photocopie), conduisent à l'obtention de données de sécurité sensiblement identiques. Au contraire, la moindre modification de l'élément visuel entraîne une forte variation de cet élément de sécurité.

Ainsi, il suffit de stocker sur un serveur la donnée de sécurité de référence « attendue » pour un document donné, et de la comparer avec celle « candidate » générée à partir d'une copie de ce document, pour savoir si l'élément visuel de ce document est intègre ou non.

Cette solution permet donc un progrès notable en ce qu'on peut garantir qu'une copie d'un document d'identité est authentique.

Néanmoins, il reste dans un certain nombre de cas possible d'usurper une identité même sur la base d'une copie authentique d'un document d'identité, car il n'y a pas toujours de contrôle de visu. Par exemple, on peut ouvrir un compte bancaire en ligne sans montrer son visage à personne : un usurpateur peut fournir une copie authentique d'une pièce d'identité d'un tiers même ne lui ressemblant pas. A noter que de plus en plus souvent les procédures d'authentification en ligne requièrent de montrer son visage en utilisant une webcam ou un smartphone pour comparaison visuelle avec la photo de la copie fournie, mais ce n'est pas systématique.

Et même lorsqu'il y a une telle comparaison, il y a toujours le risque qu'un usurpateur soit fournisse une fausse photo (une photo du détenteur légitime du document d'identité qu'il tente d'utiliser, par exemple trouvée sur un réseau social), voire même dupe la personne réalisant la comparaison. En effet, la vérification qu'un individu « ressemble » à la photo d'un document d'identité est subjective et soumise à l'aléa humain, a fortiori si la copie fournie est de mauvaise qualité (photocopie en noir et blanc, photo par smartphone, etc.), ce d'autant plus que l'on sait que sur toute la durée de vie d'un document d'identité l'apparence de son détenteur peut beaucoup évoluer, d'om une certaine tolérance.

Il serait ainsi souhaitable de disposer d'une solution simple, universelle, fiable, et totalement sécurisée d'authentification prévenant tout usage non contrôlé d'une copie d'un document d'identité.

### PRESENTATION DE L'INVENTION

Selon un premier aspect, l'invention concerne un procédé d'authentification d'un dispositif électronique d'identité présenté par un individu, le procédé étant caractérisé en ce qu'il comprend la mise en œuvre d'étapes de :
(b) Réception par des moyens de traitement de données d'un serveur d'une image acquise dudit dispositif électronique d'identité, l'image représentant au moins un élément visuel personnel de l'individu et un code dynamique de vérification visibles sur ledit dispositif électronique d'identité, ledit code dynamique de vérification contenant au moins une information de référence représentative d'une apparence attendue dudit élément visuel ;
(c) Extraction par analyse de ladite image acquise par les moyens de traitement de données du serveur de :
   - une information candidate représentative de l'apparence dudit élément visuel tel que représenté dans l'image acquise ;
   - l'information de référence représentative de l'apparence attendue dudit élément visuel contenue dans ledit code dynamique de vérification tel que représenté dans l'image acquise ;
(d) Vérification par les moyens de traitement de données du serveur que l'information candidate et l'information de référence extraites coïncident.

Selon d'autres caractéristiques avantageuses et non limitatives :
- Le procédé comprend une étape (a) d'affichage par des moyens d'affichage dudit dispositif électronique d'identité dudit code dynamique de vérification ;
- l'étape (a) comprend la génération préalable dudit code dynamique de vérification par des moyens de traitement de données dudit dispositif électronique d'identité en fonction d'au moins ladite information de référence représentative d'une apparence attendue dudit élément visuel et un mot de passe à usage unique, OTP ;
- l'étape (a) et l'étape (c) comprennent chacune la génération dudit OTP, respectivement par les moyens de traitement de données du dispositif électronique d'identité et les moyens de traitement de données du serveur, en fonction d'un secret partagé ;
- ledit mot de passe à usage unique est un mot de passe à usage unique basé sur le temps, TOTP, la génération dudit TOTP par les moyens de traitement de données du dispositif électronique d'identité et les moyens de traitement de données du serveur étant également fonction d'une information temporelle ;
- ledit code dynamique de vérification contient également au moins une donnée descriptive dudit OTP généré par les moyens de traitement de données du dispositif électronique d'identité, l'étape (c) comprenant également l'extraction de la donnée descriptive dudit OTP contenue dans ledit code dynamique de vérification tel que représenté dans l'image acquise, l'étape (d) comprenant également la vérification que l'OTP généré par les moyens de traitement de données du serveur coïncide avec ladite donnée descriptive de l'OTP extraite ;
- ledit code dynamique de vérification est affiché sous la forme d'un code QR et/ou d'un code alphanumérique ;
- ledit code dynamique de vérification contient également une signature électronique de ladite information de référence représentative d'une apparence attendue dudit élément visuel, l'étape (c) comprenant également l'extraction de la signature électronique contenue dans ledit code dynamique de vérification tel que représenté dans l'image acquise, l'étape (d) comprenant également la vérification que ladite signature électronique extraite est valide ;
- ledit élément visuel personnel de l'individu est imprimé sur le dispositif électronique d'identité ;
- ledit élément visuel personnel de l'individu est soit un élément graphique associé à l'individu, en particulier une photographie de l'individu, une signature manuscrite de l'individu, une empreinte biométrique de l'individu ou une représentation d'au moins un attribut alphanumérique associé à l'individu ; soit un attribut alphanumérique associé à l'individu ;
- l'information représentative d'une apparence attendue dudit élément graphique est une donnée de sécurité de type Digital Photo Seal ou un modèle biométrique ;
- l'information représentative d'une apparence dudit attribut alphanumérique étant la valeur ou un haché de cet attribut alphanumérique associé à l'individu.

Selon un deuxième aspect, l'invention concerne un serveur d'authentification, caractérisé en ce qu'il comprend des moyens de traitement de données configurés pour :
- Recevoir une image acquise d'un dispositif électronique d'identité présenté par un individu, l'image représentant au moins un élément visuel personnel de l'individu et un code dynamique de vérification visibles sur ledit dispositif électronique d'identité, ledit code dynamique de vérification contenant au moins une information de référence représentative d'une apparence attendue dudit élément visuel ;
- Extraire par analyse de ladite image acquise :
   - une information candidate représentative de l'apparence dudit élément visuel tel que représenté dans l'image acquise ;
   - l'information de référence représentative de l'apparence attendue dudit élément visuel contenue dans ledit code dynamique de vérification tel que représenté dans l'image acquise ;
- Vérifier que l'information candidate et l'information de référence extraites coïncident.

Selon un troisième aspect, l'invention concerne un dispositif électronique d'identité d'un individu sur lequel est visible au moins un élément visuel personnel dudit individu, caractérisé en ce qu'il comprend des moyens de traitement de données configurés pour :
- Générer et afficher sur des moyens d'affichage un code dynamique de vérification contenant au moins une information de référence représentative d'une apparence attendue dudit élément visuel.

Selon d'autres caractéristiques avantageuses et non limitatives, les moyens de traitement de données sont en outre configurés pour générer préalablement un mot de passe à usage unique, OTP, ledit code dynamique de vérification étant généré en fonction d'au moins ladite information de référence représentative d'une apparence attendue dudit élément visuel et dudit OTP généré.

Selon un quatrième aspect, l'invention concerne un système d'authentification comprenant un serveur d'authentification selon le deuxième aspect, au moins un dispositif électronique d'identité selon le troisième aspect, et au moins un équipement client comprenant des moyens d'acquisition optique pour l'acquisition de ladite image représentant au moins l'élément visuel personnel de l'individu et le code dynamique de vérification visibles sur ledit dispositif électronique d'identité.

Selon un cinquième et un sixième aspects, l'invention concerne un produit programme d'ordinateur comprenant des instructions de code pour l'exécution d'un procédé selon le premier aspect d'authentification d'un dispositif électronique d'identité présenté par un individu ; et un moyen de stockage lisible par un équipement informatique sur lequel un produit programme d'ordinateur comprend des instructions de code pour l'exécution d'un procédé selon le premier aspect d'authentification d'un dispositif électronique d'identité présenté par d'un individu.

### DESCRIPTION DES FIGURES

D'autres caractéristiques, buts et avantages de la présente invention apparaîtront à la lecture de la description détaillée qui va suivre, au regard des figures annexées, données à titre d'exemples non limitatifs et sur lesquelles :
[Fig. 1] La figure 1 représente schématiquement un système pour la mise en œuvre du procédé selon l'invention ;
[Fig. 2a] La figure 2a représente un type (carte à puce) de dispositif électronique d'identité pouvant être utilisé dans le procédé selon l'invention ;
[Fig. 2b] La figure 2b représente un type (terminal de type smartphone) de dispositif électronique d'identité pouvant être utilisé dans le procédé selon l'invention ;
[Fig. 3a] La figure 3a représente schématiquement un exemple de configuration du premier type de dispositif électronique d'identité pouvant être utilisée dans le procédé selon l'invention ;
[Fig. 3b] La figure 3b représente schématiquement un exemple de configuration du premier type de dispositif électronique d'identité pouvant être utilisée dans le procédé selon l'invention ;
[Fig. 3c] La figure 3c représente schématiquement un exemple de configuration du premier type de dispositif électronique d'identité pouvant être utilisée dans le procédé selon l'invention ;
[Fig. 3d] La figure 3d représente schématiquement un exemple de configuration du premier type de dispositif électronique d'identité pouvant être utilisée dans le procédé selon l'invention ;
[Fig. 4] La figure 4 illustre un exemple d'évolution de code dynamique de vérification pour la mise en œuvre du procédé selon l'invention.

### DESCRIPTION DETAILLEE

### Architecture

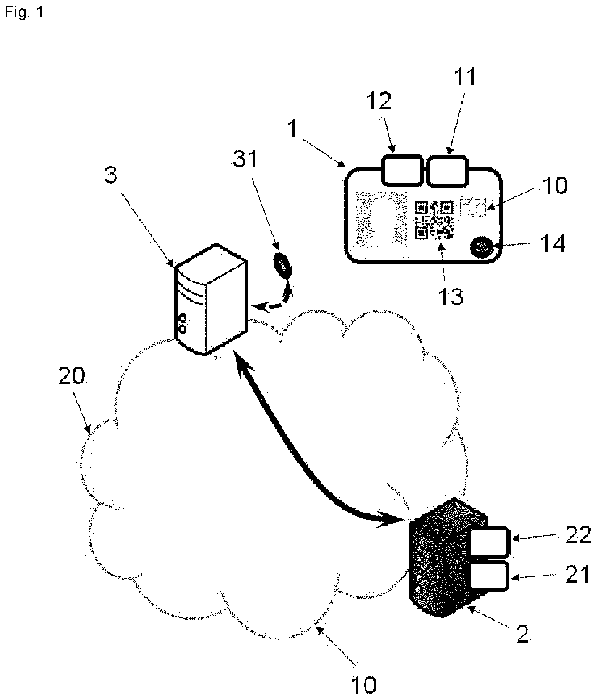

En référence à la **figure 1****,** on a représenté schématiquement une architecture de système d'authentification pour la mise en œuvre du présent procédé d'authentification d'un dispositif électronique d'identité 1 présenté par un individu (i.e. de validation de l'authenticité dudit dispositif électronique d'identité 1), notamment en vue de l'authentification/identification dudit individu sur la base de ce dispositif 1. Ce système comprend au moins ledit dispositif électronique d'identité 1 et un serveur 2. Le système peut également comprendre un équipement client 3 connecté au serveur 2 via un réseau 20 tel qu'Internet.

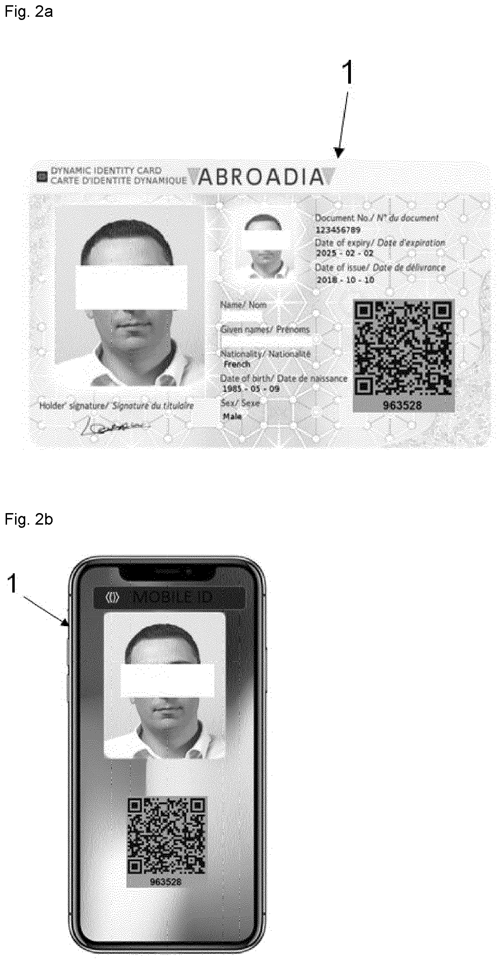

Le dispositif électronique d'identité 1 est un équipement personnel à un individu (de nombreux individus peuvent posséder chacun un tel dispositif électronique d'identité), et constitue un document d'identité officiel, avantageusement émis par un organisme gouvernemental. Selon un mode de réalisation préféré, il prend la forme d'une carte à puce (de type « smart card », voir **figure 2a**) aux dimensions standard et généralement en PVC ou polycarbonate, mais il peut s'agir également d'un terminal de type smartphone ou tablette tactile, voir **figure 2b****.**

Dans tous les cas, le dispositif électronique d'identité 1 comporte des moyens de traitement de données 11, i.e. un calculateur tel que par exemple un processeur, un microprocesseur, un contrôleur, un microcontrôleur, un FPGA etc. Ce calculateur est adapté pour exécuter des instructions de code pour mettre en œuvre le procédé ci-après. On note que si le dispositif électronique d'identité 1 est une carte à puce, les moyens de traitement de données 11 peuvent être distincts de la « puce » 10 (et le cas échéant en connexion avec cette dernière ou totalement isolés, voir plus loin), laquelle peut avoir un fonctionnement classique lorsqu'en interaction avec un lecteur. Plus précisément, on peut partir d'une carte à puce d'identité existante, et y rajouter les moyens de traitement 11.

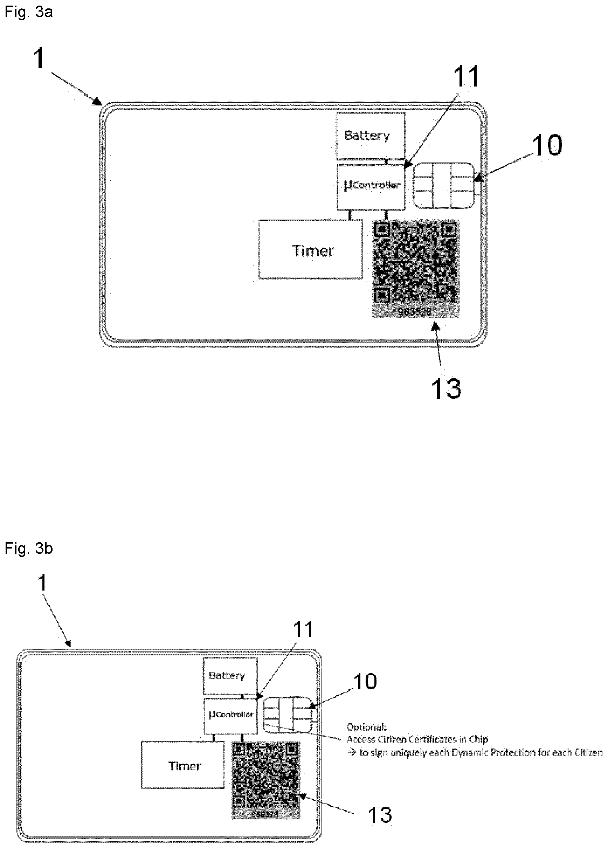

Le dispositif 1 peut également comprendre des moyens de stockage de données 12 (une mémoire, par exemple flash), des moyens d'affichage 13 (typiquement un écran, en particulier de type à encre électronique si le dispositif 1 est une carte à puce), une batterie, et éventuellement un bouton 14. Divers modes de réalisation du dispositif 1 de type carte à puce sont représentés sur les **figures 3a-3d** (leurs avantages et inconvénients seront décrits plus en détail plus loin) :
- sur la figure 3a, la puce 10 et les moyens de traitement de données 11 sont complètement isolés ;
- sur la figure 3b, la puce 10 et les moyens de traitement de données 11 sont connectés de sorte à ce que les moyens de traitement de données 11 puissent accéder aux données de la puce 10 ;

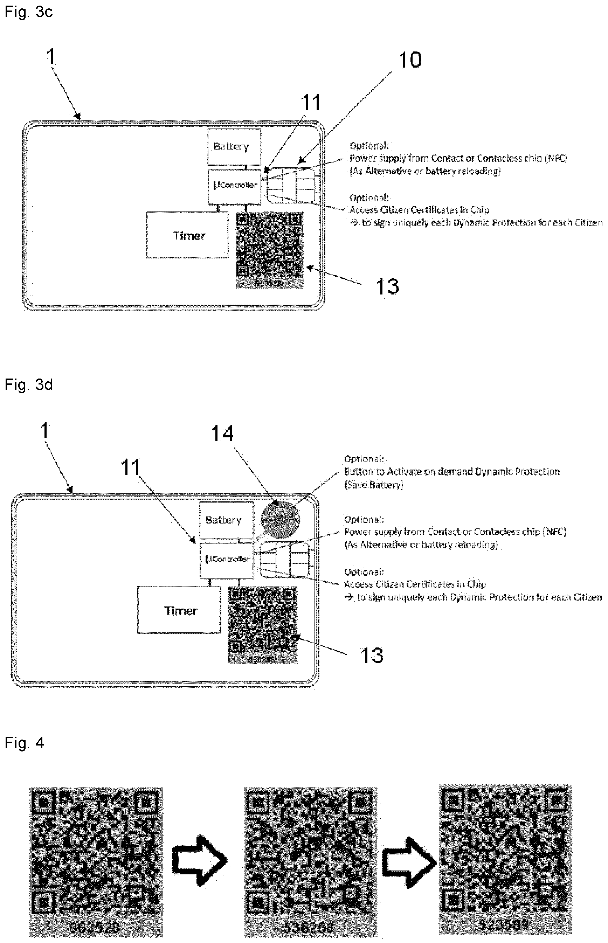

- sur la figure 3c, la puce 10 et les moyens de traitement de données 11 sont connectés électriquement, de sorte à permettre une alimentation électrique et/ou une recharge de la batterie par contact (lors d'une communication avec un lecteur conventionnel) ou par induction (lors d'une communication sans contact) ;
- sur la figure 3d, le dispositif électronique d'identité 1 comprend un bouton 14 connecté aux moyens 11. Sur cette figure 3d, on trouve la double liaison entre la puce 10 et les moyens de traitement de données 11 de la figure 3c, mais on pourrait alternativement trouver un bouton 14 dans les architectures des figures 3a et 3d. Et on répète que dans toutes ces figures, la batterie et le bloc timer restent optionnels.

Le serveur 2 est un équipement distant, sécurisé, typiquement d'une autorité ou d'un fournisseur de solution de sécurité. A nouveau il comprend des moyens de traitement de données 21 et une mémoire 22.

L'équipement client 3 est un terminal local comprenant des moyens d'acquisition optique 31, et adapté pour acquérir et le cas échéant transmettre au serveur 2 une image (du dispositif 1 comme on le verra). L'équipement client 3 et le serveur 2 comprennent avantageusement des interfaces de communications leur permettant de dialoguer à distance.

On note que l'équipement 3 reste optionnel, et peut prendre de nombreux modes de réalisation. Plus précisément et comme l'on verra, il suffit pour la mise en œuvre du procédé que le serveur 2 puisse recevoir une image acquise du dispositif électronique d'identité 1 d'une façon ou d'une autre, y compris indirectement :
- Selon un premier mode de réalisation, l'équipement client 3 est directement connecté au serveur 2 via le réseau 20, et est notamment un terminal mobile de type smartphone, un scanner, une webcam, etc., lequel peut prendre en photo/scanner le dispositif électronique d'identité 1 (ou une copie de ce dernier, en particulier une photocopie) et envoyer l'image acquise au serveur via un réseau filaire (Ethernet), sans-fil (Wi-Fi) ou de téléphonie mobile (GPRS, 3G, 4G ou autre). Par exemple, l'équipement client 3 peut être un scanner à un guichet de banque, utilisé par un employé qui souhaite authentifier en direct le dispositif électronique d'identité 1 d'un individu devant lui ;
- Selon un deuxième mode de réalisation, l'équipement client 3 n'est pas connecté directement au serveur 2, qu'il soit offline ou que la connexion soit indirecte. On peut envisager par exemple que :
   ∘ l'équipement client 3 est à nouveau un terminal mobile de type smartphone, un scanner ou une webcam, cette fois personnel à l'individu qui souhaite l'authentification, qui acquiert toujours l'image du dispositif électronique d'identité 1 mais la transfère (par exemple par e-mail ou via upload sur un site internet) à un tiers (par exemple un loueur de véhicule : typiquement, il doit fournir son permis de conduire pour conclure une location par internet), et c'est ce dernier qui va se connecter au serveur 2 pour la mise en œuvre du procédé ;
   ∘ L'équipement client 3 est un équipement non connecté tel qu'un appareil photo numérique, devant transmettre l'image acquise par exemple par câble usb à un équipement tiers (par exemple un PC), lequel est connecté directement ou indirectement au serveur 2 ;
- Selon un troisième mode de réalisation, l'équipement client 3 est confondu avec le dispositif électronique d'identité 1, en particulier si ce dernier est un terminal mobile de type smartphone. On peut imaginer que l'image du dispositif électronique d'identité 1 s'acquière par exemple en prenant une photo de lui-même dans un miroir, ou via une capture d'écran.

Dans tous les cas, comme expliqué l'équipement client 3 peut acquérir une image d'une image du dispositif électronique d'identité 1, i.e. photographie une photocopie plutôt que le dispositif 1 directement, voire d'une photocopie d'une photocopie, etc. Comme l'on verra, il suffira que l'image acquise représente le dispositif 1. On comprendra que le présent procédé n'est limité à aucune façon d'obtenir cette image et aucune nature en particulier (l'image acquise peut être en noir et blanc, de mauvaise qualité, etc.).

### Principe

La présente invention propose qu'au moins un élément visuel personnel de l'individu et un code dynamique de vérification soient visibles sur ledit dispositif électronique d'identité 1, ledit code dynamique de vérification contenant au moins une information de référence représentative d'une apparence attendue dudit élément visuel.

Par élément visuel personnel de l'individu, on entend soit un attribut alphanumérique associé à l'individu, c'est-à-dire un objet de type chaîne de caractères, généralement le nom et/ou le prénom de l'individu, mais en particulier ce peut être tout attribut choisi choisi parmi une liste de possibilités telles que :
- Numéro du document d'identité que constitue le dispositif 1 ;
- Date d'expiration ;
- Date de délivrance ;
- Nom ;
- Prénom(s) ;
- Nationalité ;
- Date de Naissance ;
- Lieu de Naissance ;
- Sexe ;
- Taille ;
- Adresse ;
- etc.
soit un élément graphique associé à l'individu, c'est-à-dire une « image » qui n'est pas de nature alphanumérique, en d'autres termes un objet constitué de pixels et non une simple chaîne de caractères, et traité en tant que tel. Ladite image peut avantageusement représenter :
- Au moins une photographie de l'individu (comme on trouve aujourd'hui sur tous les documents d'identité),
- au moins une signature manuscrite de l'individu,
- au moins une empreinte biométrique de l'individu (par exemple une empreinte digitale, une empreinte palmaire, un iris, etc.), et/ou
- au moins un attribut alphanumérique associé à l'utilisateur tel que défini ci-avant (ici on parle bien de la représentation de l'attribut alphanumérique - en tant qu'image à part entière - et non pas la chaîne de caractères qu'il code, i.e. il n'y a pas d'OCR).

On comprendra qu'il peut y avoir une pluralité d'éléments visuels personnels visibles, avantageusement au moins un élément graphique de type photographie, et que ledit code dynamique de vérification contient pour chacun d'au moins une partie de (avantageusement toute) cette pluralité d'éléments visuels une information de référence représentative d'une apparence attendue de cet élément visuel personnel.

Par ailleurs, il est tout à fait possible qu'une zone étendue du document d'identité 1 (couvrant par exemple la photographie et un attribut alphanumérique, voire toute la surface visible) soit considérée comme un seul élément graphique. Toutes les combinaisons sont possibles, tant que chaque élément graphique est traité en tant qu'image.

Ce ou ces éléments visuels personnels sont imprimés sur le dispositif électronique d'identité 1 (typiquement si le dispositif électronique d'identité 1 est une carte à puce, voir exemple de la figure 2a), et/ou affichés par les moyens d'affichage 13 (typiquement si le dispositif électronique d'identité 1 est un smartphone, voir l'exemple de la figure 2b). Dans le premier cas (élément visuels imprimés sur le dispositif électronique d'identité 1), on comprend que leur apparence est donc permanente sur la durée de vie du dispositif 1.

A noter que préférentiellement le ou les éléments visuels pour lesquels une information de référence est contenue dans le code de vérification dynamique sont disposés de sorte à être visibles simultanément, et en même temps que ce code de vérification dynamique (par exemple sur la même face, ce qui est cas dans l'exemple de la Figure 2a), ce qui permet l'acquisition d'une seule image représentant en même temps chaque élément visuel personnel de l'individu et le code dynamique de vérification, mais on comprendra qu'il est possible qu'une partie de ces éléments visuels soient par exemple disposés sur un verso de la carte, ce qui oblige à acquérir deux images (recto et verso) pour que l'ensemble des éléments visuels soit représenté. Dans tous les cas, il faut qu'au moins un élément visuel et le code dynamique de vérification soient visibles en même temps pour éviter la fraude, et dans la suite de la description on prendra l'exemple préféré d'une carte à puce à une face du type de celle de la Figure 2a.

Le code de vérification dynamique est affiché quant à lui nécessairement sur les moyens d'affichage 13, puisqu'il est dynamique. Cela signifie qu'il varie au cours du temps comme représenté par exemple sur la **Figure 4** (on verra différents algorithmes plus loin), et donc change d'apparence, mais pour autant il contient toujours la ou lesdites informations de référence représentatives d'une apparence attendue d'un élément visuel.

Par information représentative d'une apparence d'un élément visuel, on entend une donnée descriptive d'au moins un fragment de cet élément visuel tel qu'il apparait, i.e. une « empreinte », qui va permettre des comparaisons.

On désigne comme information « de référence » l'information représentative de l'apparence « théorique » de l'élément visuel, i.e. tel qu'attendue. Par contraste, on désigne comme information « candidate » l'information représentative de l'apparence constatée de l'élément visuel, i.e. tel que représenté dans une image acquise. On comprend que cette apparence constatée n'est généralement pas parfaitement identique à l'apparence attendue, du fait des conditions des défauts inhérents à l'acquisition d'une image, et à la variabilité des conditions de prise de vue (éclairage, bougé, distance, etc.).

Néanmoins, ladite information représentative de l'apparence est choisie de telle sorte que si deux éléments visuels ont des apparences qui coïncident (i.e. il s'agit du même élément visuel même si les conditions de prise de vue ne sont pas identiques), alors leurs informations représentatives coïncident (i.e. présentent une distance selon une métrique donnée inférieure à un seuil) également.

Ainsi, l'information de référence et l'information candidate coïncident si et seulement si l'apparence constatée et l'apparence attendue de l'élément visuel coïncide, i.e. qu'il s'agit bien du même élément visuel, en d'autres termes que l'élément visuel imprimé/affiché sur le dispositif électronique d'identité 1 n'a pas été frauduleusement altérée. Cette vérification peut être faite pour chaque élément visuel pour lequel une information représentative est contenu par le code dynamique de vérification.

Si l'élément visuel est un élément graphique tel qu'une photographie, une signature, une empreinte biométrique ou une représentation d'un attribut alphanumérique, i.e. une image, on pourra utiliser comme information représentative de l'apparence de l'élément graphique le « Digital Photo Seal », i.e. la donnée de sécurité telle que décrite dans la demande EP3206192, basée sur la position de points singuliers de l'élément graphique. Dans le cas de l'empreinte biométrique, on pourra prendre un template de l'empreinte biométrique, en français un modèle biométrique, i.e. l'ensemble des « caractéristiques » de l'empreinte, par exemple la position et l'orientation de minuties pour une empreinte digitale.

Si l'élément visuel est un attribut alphanumérique, l'information de référence représentative d'une apparence attendue de cet élément visuel peut directement être la valeur de cet attribut alphanumérique ou un haché (en anglais un « hash », c'est-à-dire une empreinte cryptographique) de cet attribut alphanumérique en utilisant une fonction de hachage cryptographique quelconque.

En résumé, on comprend que le dispositif électronique d'identité affiche sa propre « clé » de vérification (elle n'a besoin d'être stockée nulle part), et ce de façon dynamique, ce qui rend caduc les vieilles copies du dispositif 1. Plus précisément, un code généré n'est valide que pour une durée brève, ce qui permet sans difficulté son utilisation pour une authentification comme dans l'art antérieur, y compris sur la base d'une copie, mais de manière temporaire. Ainsi, il est impossible qu'un tiers utilise postérieurement une copie à des fins détournées : le code dynamique de vérification, bien que valide, aura expiré.

Le code dynamique de vérification est préférentiellement affiché sous la forme d'un code QR, ou toute autre code matriciel, comme visible sur les figures, de fait du volume de données qu'il peut contenir et sa robustesse. Néanmoins, on pourra afficher n'importe quel type de signal visuel, y compris un watermark (« tatouage numérique » en français), un code alphanumérique, une lumière clignotante, etc. Avantageusement, le code dynamique de vérification peut être affiché sous plusieurs formes à la fois, comme l'on voit sur les figures (un code QR plus un code à six chiffres), i.e. une partie primaire contenant toutes les données à transmettre (le code QR dans les figures) et une partie secondaire de redondance contenant tout ou partie des données (le code à six chiffres), préférentiellement sous forme alphanumérique pour pouvoir être lisible et saisie sur une interface. Cette partie secondaire a de nombreux usages. Elle peut permettre d'une part à l'utilisateur de visualiser plus facilement la mise à jour dynamique du code de vérification, elle peut augmenter la sécurité (caractère redondant), voire même être utilisé dans des authentifications supplémentaires, voir plus loin.

On note que des cartes à puce avec affichage d'un code de vérification dynamique sont connues, notamment le cryptogramme visuel (CVV) d'une carte bancaire, voir par exemple la demande FR3038418. On parle alors de D-CVV. On comprendra que de tels codes sont juste des clés permettant une transaction, ne sont pas destinés à être représentés dans une image, et surtout ne contiennent pas d'information de référence représentative d'une apparence attendue d'un élément visuel personnel visible sur la carte.

L'utilisation d'une technologie à encre électronique (e-ink) pour les moyens d'affichage permet de limiter au maximum la consommation électrique (l'affichage en lui-même ne consomme rien, c'est le changement d'état qui consomme) et d'être compatible avec un dispositif 1 de type carte à puce.

A noter que si les moyens de traitement de données 11 peuvent accéder aux données de la puce 10 (la puce 10 et les moyens de traitement de données 11 sont connectés comme dans la figure 3c), le code dynamique de vérification comprend en outre avantageusement une signature des informations de référence. En effet, la puce 10 stocke des certificats pouvant être utilisés pour signature électronique. On rappelle qu'une signature électronique d'une donnée est typiquement un chiffré d'un haché de cette donnée au moyen d'une clé privée.

### Génération du code dynamique de vérification

Dans un mode de réalisation préféré, le procédé commence par une étape (a) d'affichage par des moyens d'affichage 13 dudit dispositif électronique d'identité 1 dudit code dynamique de vérification de génération, avantageusement précédée par la génération dudit code dynamique de vérification par des moyens de traitement de données 11 dudit dispositif électronique d'identité 1 en fonction d'au moins ladite information de référence représentative d'une apparence attendue dudit élément visuel et un mot de passe à usage unique, OTP. C'est cet OTP qui permet le caractère dynamique.

Par OTP, on entend une donnée valide pour une seule « session » (par session on entend soit une utilisation du dispositif électronique d'identité 1, i.e. une authentification, soit un intervalle temporel, par exemple 10 minutes). De façon connue, la génération du code dynamique met typiquement en œuvre une fonction cryptographique (par exemple en utilisant une clé publique du serveur 2) dans laquelle l'OTP est utilisé comme aléa.

L'étape (a) comprend à ce titre préférentiellement chacune la génération dudit OTP, sur la base d'un secret stocké par le dispositif électronique d'identité 1 (par exemple sur sa mémoire 12).

Selon un premier mode de réalisation, l'OTP est « basé sur les événements » (event-based). Cela signifie qu'il faut un événement pour générer un OTP, par exemple l'appui sur un bouton 14 s'il y en a un. De nombreux algorithmes de génération d'un tel OTP sont connus, par exemple on va appliquer récursivement une fonction de hachage cryptographique à une valeur initiale, cette valeur et/ou un paramètre de la fonction constituant le secret. Alternativement, le secret peut directement être une liste d'OTP pré-générés, la liste étant dépilée à chaque événement. Encore alternativement, l'OTP peut être de type HOTP, i.e. « HMAC-based », où un HMAC (hash-based message authentication code) est un type de code d'authentification de message. La génération d'un HOTP utilise un compteur, incrémenté à chaque utilisation.

Dans un tel mode réalisation, préférentiellement les moyens d'affichage 13 ne sont actifs que pendant une durée prédéterminée après la génération du code dynamique de vérification, par exemple 1 minute, pour économiser la batterie.

Selon un deuxième mode de réalisation, l'OTP est « basé sur le temps » (time-based). On parle alors de TOTP. Ici la génération de l'OTP est également fonction d'une information temporelle, en particulier fournie par un timer mis en œuvre par les moyens de traitement de données 11. Ainsi, le code dynamique de vérification généré est valide pendant un intervalle de temps prédéterminé, par exemple 30 secondes. A l'expiration de cet intervalle, un nouveau TOTP et donc un nouveau code de vérification est généré, et ainsi de suite. De nombreux algorithmes de génération d'un TOTP sont connus, on citera par exemple une extension de l'algorithme de génération des HOTP, dans lequel le compteur est remplacé par l'information temporelle.

Dans ce second mode de réalisation, les moyens d'affichages 13 peuvent afficher en permanence le code dynamique de vérification actuellement valide (en particulier si les moyens sont à encre électronique et à basse consommation), i.e. mettre à jour l'affichage à l'expiration de chaque intervalle de temps de validité, ou bien n'activer l'affichage que par exemple lorsque le bouton 14 est pressé. On note que la consommation électrique peut être plus élevée, mais un tel mode est particulièrement préféré car il n'y a pas de risque de « décalage » d'OTP qui pourrait survenir si par exemple dans le mode de réalisation event-based l'utilisateur appuyait par erreur plusieurs fois de suite sur le bouton 14 : à un instant donné il y a un unique TOTP possible.

La génération en elle-même du code dynamique de vérification à partir de la ou les informations de référence et de l'OTP pourra être mise en œuvre de n'importe quelle façon connue, notamment en chiffrant les informations en utilisant l'OTP comme aléa.

A noter que le code dynamique de vérification peut également contenir une ou plusieurs données représentatives de l'OTP, i.e. soit l'OTP en lui-même soit des données de vérification de l'OTP, par exemple un haché de l'OTP et/ou une information temporelle sur la génération de l'OTP (notamment la date de génération, ou bien l'information temporelle utilisée pour la génération si c'est un TOTP), pour éviter que l'on puisse accéder aux informations de référence en déchiffrant le code dynamique. A noter qu'il est tout à fait possible que le code contienne à la fois l'OTP en lui-même et une autre donnée représentative telle que la date de génération. Comme l'on verra cela permettra notamment de détecter des cas dans lesquels l'image du dispositif électronique d'identité n'est pas frauduleuse mais simplement expirée. Le code dynamique de vérification peut contenir le cas échéant une signature électronique de la ou les données représentatives de l'OTP, pour garantir encore davantage leur authenticité. Selon un mode de réalisation, ladite information représentative de l'OTP constitue la partie secondaire l'OTP (le code alphanumérique à six chiffres visible sur les figures).

En résumé, le code dynamique de vérification peut contenir :
- les informations de référence représentant l'apparence attendue de chacun des éléments visuels ;
- une signature électronique de ces informations de référence ;
- l'OTP et/ou d'autres données représentatives de l'OTP ;
- une signature électronique de ces données représentatives de l'OTP.

A ce stade, le dispositif électronique d'identité 1 peut être utilisable par son détenteur à n'importe quel moment : il lui suffit comme expliqué d'acquérir d'une façon ou d'une autre (par exemple via les moyens d'acquisition 31 du client 3) d'une image acquise du dispositif électronique d'identité 1, l'image représentant au moins un élément visuel personnel de l'individu et un code dynamique de vérification visibles sur ledit dispositif électronique d'identité 1. Préférentiellement, ladite image représente tout le dispositif électronique d'identité 1, du moins toute une face. Comme expliqué, il peut être nécessaire d'acquérir plusieurs images, par exemple pour voir toutes les faces.

### Vérification

On va à présent décrire la partie principale du procédé selon l'invention d'authentification d'un dispositif électronique d'identité 1 présenté par un individu comme étant le sien, et fournissant à ce titre d'une manière ou d'une autre une image acquise de ce dispositif électronique d'identité 1.

L'objectif est de vérifier que l'étape (a) s'est bien déroulée comme décrit précédemment, et qu'on n'est pas en présence d'un faux (par exemple une image qui aurait être modifiée frauduleusement). Pour cela, l'entité qui souhaite l'authentification (par exemple une banque) soumet cette image au serveur 2.

Dans une étape (b), les moyens de traitement de données 21 du serveur 2 reçoivent ladite image acquise d'un dispositif électronique d'identité 1 présenté par ledit individu. Comme expliqué, l'image représente au moins un élément visuel personnel de l'individu et un code dynamique de vérification visibles sur ledit dispositif électronique d'identité 1.

Dans une étape (c), les moyens de traitement de données 21 du serveur 2 analysent l'image, de sorte à extraire :
- une information candidate représentative de l'apparence dudit élément visuel tel que représenté dans l'image acquise ;
- l'information de référence représentative de l'apparence attendue dudit élément visuel contenue dans ledit code dynamique de vérification tel que représenté dans l'image acquise (et le cas échant la donnée représentative de l'OTP et/ou la signature électronique).

L'extraction de l'information candidate comprend l'identification de l'élément visuel qui apparait dans l'image (à nouveau un élément graphique, un attribut alphanumérique, etc.), et l'obtention de l'information candidate de la même façon que l'information de référence a été obtenue de l'élément visuel attendu. L'identification des éléments visuel peut être faite grâce à des modèles et des masques (en effet, les divers éléments visuels et le code dynamique de vérification apparaissent toujours au même endroit sur la surface du dispositif électronique d'identité 1), et ainsi, l'analyse de l'image peut comprendre la reconnaissance d'un contour du dispositif électronique d'identité 1, le recadrage de ce contour, et l'application des masques prédéterminés. Pour cela, des réseaux de neurones à convolutions adaptés pourront être utilisés astucieusement.

Une fois que les éléments visuels et le code dynamique de vérification ont été « isolés » sur l'image, on applique les mêmes algorithmes que ceux qui ont été appliqués sur les éléments visuels d'identités pour obtenir les informations candidates représentatives de l'apparence dudit élément visuel tel que représenté.

Par exemple, si un élément visuel est un élément graphique de type image, l'information représentative de l'apparence dudit élément visuel peut être une donnée de sécurité de type « Digital Photo Seal ». Similairement, si un élément visuel est un attribut alphanumérique, on peut mettre en œuvre une reconnaissance optique de caractères (OCR) de sorte à lire cet attribut alphanumérique. Enfin, si un élément visuel est une empreinte biométrique, on pourra mettre en œuvre un algorithme d'extraction du template de l'empreinte biométrique (le modèle biométrique/les caractéristiques) à partir de l'image (reconnaissance de minuties par exemple).

On comprend que les informations de référence et candidate devront être obtenues de manière identique de sorte à pouvoir être comparées.

En ce qui concerne l'information de référence représentative de l'apparence attendue dudit élément visuel contenue dans ledit code dynamique de vérification tel que représenté dans l'image acquise, il faut lire le code dynamique de vérification (ce qui est facile si par exemple il prend la forme d'un code QR), et le déchiffrer.

Cela nécessite la connaissance de l'OTP. Dans tous les cas, l'étape (c) comprend également la génération dudit OTP du coté serveur 2 de manière identique à la génération qui a eu lieu du coté dispositif électronique d'identité 1, de sorte soit à vérifier un OTP contenu dans le code dynamique lu, soit à déchiffrer ce code dynamique.

En d'autres termes, l'étape (a) et l'étape (c) comprennent chacune la génération dudit OTP, respectivement par les moyens de traitement de données 11 du dispositif électronique d'identité 1 et les moyens de traitement de données 21 du serveur 2, en fonction d'un secret partagé. On comprend ainsi qu'à la création du dispositif électronique d'identité 1 (généralement par une entité gouvernementale), le même secret est généré et chargé dans la mémoire 12 du dispositif électronique d'identité 1 et la mémoire 22 du serveur 2, associé en particulier à un identifiant du dispositif électronique d'identité 1.

Si l'OTP est un TOTP, une information temporelle est également prise en compte du coté serveur 2. Naturellement, on comprend qu'elle ne peut être exactement la même que celle lors de la mise en œuvre de l'étape (a), car il faut quelques secondes d'acquisition de l'image, de transfert par le réseau 20 et de traitement, mais dans la mesure où le TOTP est généré par intervalle de temps, le même TOTP restera généré du coté serveur 2.

Dans une étape (d), les moyens de traitement de données 21 du serveur vérifient 2 que l'information candidate et l'information de référence coïncident.

Le terme « coïncide » signifie de façon générale que le résultat d'une comparaison de l'information candidate et de l'information de référence doit montrer qu'elles sont identiques, ou du moins présenter une distance inférieure à un seuil d'erreur prédéterminé. Cela dépend du type d'élément visuel. Par exemple, pour les éléments graphiques, des données de sécurité de type Digital Photo Seal coïncident si elle différent de moins de 10%. En ce qui concernent des attributs alphanumériques, ils doivent être identiques.

Si le dispositif 1 ou l'image acquise le représentant a été altéré (par exemple en remplaçant la photographie), alors les informations candidates et de référence correspondantes ne coïncideront pas (pour au moins un élément visuel), et l'authentification sera rejetée. Une alerte pour utilisation frauduleuse peut être émise.

De façon préférée, si l'OTP ou une donnée représentative de l'OTP est contenue dans le code dynamique de vérification, l'étape (d) comprend la comparaison de cet OTP ou donnée représentative de l'OTP obtenu avec l'OTP généré par les moyens de traitement de données 21 du serveur 2. Par exemple, si la donnée représentative de l'OTP obtenue est un haché, alors les moyens de traitement de données 21 du serveur 2 calculent le haché de l'OTP généré, et vérifient qu'ils sont identiques. Sinon, c'est que l'OTP utilisé pour générer le code dynamique de vérification représenté dans l'image acquise est expiré. A noter que cela ne signifie pas nécessairement une utilisation frauduleuse, mais a priori que la copie est trop ancienne. Il suffit d'inviter l'individu à renouveler sa tentative d'authentification, avec un OTP plus récent.

De façon préférée, si le code dynamique de vérification contient une signature, l'étape (d) comprend également la vérification de cette signature, typiquement en la déchiffrant (c'est un chiffré d'un haché des informations de référence) avec une clé publique, elle permet de garantir l'authenticité des informations contenues dans le code de vérification dynamique. Si ce n'est pas le cas, c'est qu'on a tenté de générer un faux code dynamique de vérification (sur la base d'éléments visuels attendus « contrefaits »), et donc une alerte pour utilisation frauduleuse peut être émise.

Au contraire, si :
- Chaque information de référence obtenue coïncide avec l'information candidate correspondante ;
- Chaque donnée descriptive de l'OTP obtenue coïncide avec l'OTP généré ;
- Chaque signature électronique est valide ;

Alors l'authentification est confirmée.

A noter que pour des authentifications supplémentaires (une fois qu'une première authentification selon le présent procédé a été accomplie), on peut mettre en œuvre des authentifications simplifiées sur la base du dispositif électronique d'identité 1, notamment dans un contexte d'authentification forte (par exemple, la première authentification complète est requise pour ouvrir un compte en banque, et ensuite l'authentification simplifié est utilisée en complément d'un mécanisme de login/mot de passe pour accéder en ligne aux comptes).

Par « simplifiée », on entend que l'acquisition d'une image n'est plus nécessaire, il suffit par exemple de saisir la partie secondaire du code dynamique de vérification (i.e. le code alphanumérique à six chiffres, voir avant).

Une authentification complète peut être réexigée au bout d'un certain temps, par exemple un an.

### Equipements

Selon un deuxième et un troisième aspect, sont proposés le serveur 2 d'authentification et le dispositif électronique d'identité 1 pour la mise en œuvre du procédé selon le premier aspect, i.e. l'authentification du dispositif électronique d'identité 1.

Le serveur 2 est typiquement connecté à un réseau 20, et comprend des moyens de traitement de données 21 configurés pour :
- Recevoir une image acquise d'un dispositif électronique d'identité 1 présenté par un individu, l'image représentant au moins un élément visuel personnel de l'individu et un code dynamique de vérification visibles sur ledit dispositif électronique d'identité 1, ledit code dynamique de vérification contenant au moins une information de référence représentative d'une apparence attendue dudit élément visuel ;
- Extraire par analyse de ladite image acquise :
   - une information candidate représentative de l'apparence dudit élément visuel tel que représenté dans l'image acquise ;
   - l'information (ou les informations) de référence représentative(s) de l'apparence attendue dudit (ou desdits) élément(s) visuel(s) contenue(s) dans ledit code dynamique de vérification tel que représenté dans l'image acquise (et le cas échéant au moins une donnée représentative d'un OTP et/ou une signature électronique) ;
- Vérifier que l'information candidate et l'information de référence extraites coïncident, avantageusement après avoir généré un OTP, et le cas échéant vérifier que cet OTP coïncidait avec la ou les données représentatives d'un OTP extraites, et/ou vérifier la signature électronique extraite.

Le dispositif électronique d'identité 1 d'un individu est comme expliqué une carte à puce ou un terminal de type smartphone, sur lequel est visible au moins un élément visuel personnel dudit individu (préférentiellement imprimé si c'est une carte à puce).

Il comprend des moyens de traitement de données 11, une mémoire 12, des moyens d'affichage 13, et potentiellement un bouton 14 et/ou une batterie.

Les moyens de traitement de données 11 sont configurés pour :
- Avantageusement générer un mot de passe à usage unique, OTP, en fonction d'un secret préférentiellement partagé avec le serveur 2 ;
- Générer et afficher sur les moyens d'affichage 13 un code dynamique de vérification contenant au moins une information de référence représentative d'une apparence attendue dudit élément visuel (et le cas échéant au moins une donnée représentative d'un OTP et/ou une signature électronique), ledit code dynamique de vérification étant préférentiellement généré en fonction d'au moins ladite information de référence représentative d'une apparence attendue dudit élément visuel et dudit OTP généré.

Selon un quatrième aspect, est proposé le système d'authentification comprenant un serveur d'authentification 2 selon le deuxième aspect et au moins un dispositif électronique d'identité 1 (en particulier un pour chaque individu) selon le troisième aspect.

Le système peut en outre comprendre au moins un équipement client 3 (typiquement connecté au serveur 2 via le réseau 20, directement ou indirectement) comprenant des moyens d'acquisition optique 31 pour l'acquisition de ladite image représentant au moins l'élément visuel personnel de l'individu et le code dynamique de vérification visibles sur ledit dispositif électronique d'identité 1.

### Produit programme d'ordinateur

Selon un cinquième et un sixième aspects, l'invention concerne un produit programme d'ordinateur comprenant des instructions de code pour l'exécution (en particulier sur les moyens de traitement de données 11, 21, du dispositif électronique d'identité 1 et/ou du serveur 2) d'un procédé selon le premier aspect de l'invention d'authentification d'un dispositif électronique d'identité 1, ainsi que des moyens de stockage lisibles par un équipement informatique (une mémoire 12, 22, des équipements 1, 2) sur lequel on trouve ce produit programme d'ordinateur.

## Revendications

1. Procédé d'authentification d'un dispositif électronique d'identité (1) présenté par un individu, le procédé étant **caractérisé en ce qu'**il comprend la mise en œuvre d'étapes de :
(b) Réception par des moyens de traitement de données (21) d'un serveur (2) d'une image acquise dudit dispositif électronique d'identité (1), l'image représentant au moins un élément visuel personnel de l'individu et un code dynamique de vérification visibles sur ledit dispositif électronique d'identité (1), ledit code dynamique de vérification contenant au moins une information de référence représentative d'une apparence attendue dudit élément visuel, ledit élément visuel visible sur ledit dispositif électronique d'identité (1) étant un élément graphique, en particulier une photographie ou une signature manuscrite de l'individu, l'information de référence représentative d'une apparence attendue dudit élément graphique étant une donnée de sécurité de type Digital Photo Seal ;
(c) Extraction par analyse de ladite image acquise par les moyens de traitement de données (21) du serveur (2) de :
- une information candidate représentative de l'apparence dudit élément visuel tel que représenté dans l'image acquise ;
- l'information de référence représentative de l'apparence attendue dudit élément visuel contenue dans ledit code dynamique de vérification tel que représenté dans l'image acquise ;
(d) Vérification par les moyens de traitement de données (21) du serveur (2) que l'information candidate et l'information de référence extraites coïncident.

2. Procédé selon la revendication 1, comprenant une étape (a) d'affichage par des moyens d'affichage (13) dudit dispositif électronique d'identité (1) dudit code dynamique de vérification.

3. Procédé selon la revendication 2, dans lequel l'étape (a) comprend la génération préalable dudit code dynamique de vérification par des moyens de traitement de données (11) dudit dispositif électronique d'identité (1) en fonction d'au moins ladite information de référence représentative d'une apparence attendue dudit élément visuel et un mot de passe à usage unique, OTP.

4. Procédé selon la revendication 3, dans lequel l'étape (a) et l'étape (c) comprennent chacune la génération dudit OTP, respectivement par les moyens de traitement de données (11) du dispositif électronique d'identité (1) et les moyens de traitement de données (21) du serveur (2), en fonction d'un secret partagé.

5. Procédé selon la revendication 4, dans lequel ledit mot de passe à usage unique est un mot de passe à usage unique basé sur le temps, TOTP, la génération dudit TOTP par les moyens de traitement de données (11) du dispositif électronique d'identité (1) et les moyens de traitement de données (21) du serveur (2) étant également fonction d'une information temporelle.

6. Procédé selon l'une des revendications 3 à 5, dans lequel ledit code dynamique de vérification contient également au moins une donnée descriptive dudit OTP généré par les moyens de traitement de données (11) du dispositif électronique d'identité (1), l'étape (c) comprenant également l'extraction de la donnée descriptive dudit OTP contenue dans ledit code dynamique de vérification tel que représenté dans l'image acquise, l'étape (d) comprenant également la vérification que l'OTP généré par les moyens de traitement de données (21) du serveur (2) coïncide avec ladite donnée descriptive de l'OTP extraite.

7. Procédé selon l'une des revendications 2 à 6, dans lequel ledit code dynamique de vérification est affiché sous la forme d'un code QR et/ou d'un code alphanumérique.

8. Procédé selon l'une des revendications 1 à 7, dans lequel ledit code dynamique de vérification contient également une signature électronique de ladite information de référence représentative d'une apparence attendue dudit élément visuel, l'étape (c) comprenant également l'extraction de la signature électronique contenue dans ledit code dynamique de vérification tel que représenté dans l'image acquise, l'étape (d) comprenant également la vérification que ladite signature électronique extraite est valide.

9. Procédé selon l'une des revendications 1 à 8, dans lequel ledit élément visuel personnel de l'individu est imprimé sur le dispositif électronique d'identité (1).

10. Serveur d'authentification (2), **caractérisé en ce qu'**il comprend des moyens de traitement de données (21) configurés pour :
- Recevoir une image acquise d'un dispositif électronique d'identité (1) présenté par un individu, l'image représentant au moins un élément visuel personnel de l'individu et un code dynamique de vérification visibles sur ledit dispositif électronique d'identité (1), ledit code dynamique de vérification contenant au moins une information de référence représentative d'une apparence attendue dudit élément visuel, ledit élément visuel visible sur ledit dispositif électronique d'identité (1) étant un élément graphique, en particulier une photographie ou une signature manuscrite de l'individu, l'information de référence représentative d'une apparence attendue dudit élément graphique étant une donnée de sécurité de type Digital Photo Seal ;
- Extraire par analyse de ladite image acquise :
- une information candidate représentative de l'apparence dudit élément visuel tel que représenté dans l'image acquise ;
- l'information de référence représentative de l'apparence attendue dudit élément visuel contenue dans ledit code dynamique de vérification tel que représenté dans l'image acquise ;
- Vérifier que l'information candidate et l'information de référence extraites coïncident.

11. Dispositif électronique d'identité (1) d'un individu sur lequel est visible au moins un élément visuel personnel dudit individu, ledit élément visuel visible sur ledit dispositif électronique d'identité (1) étant un élément graphique, en particulier une photographie ou une signature manuscrite de l'individu, **caractérisé en ce qu'**il comprend des moyens de traitement de données (11) configurés pour :
- Générer et afficher sur des moyens d'affichage (13) un code dynamique de vérification contenant au moins une information de référence représentative d'une apparence attendue dudit élément visuel, l'information de référence représentative d'une apparence attendue dudit élément graphique étant une donnée de sécurité de type Digital Photo Seal.

12. Dispositif selon la revendication 11, dans lequel les moyens de traitement de données (11) sont en outre configurés pour générer préalablement un mot de passe à usage unique, OTP, ledit code dynamique de vérification étant généré en fonction d'au moins ladite information de référence représentative d'une apparence attendue dudit élément visuel et dudit OTP généré.

13. Système d'authentification comprenant un serveur d'authentification (2) selon la revendication 10, au moins un dispositif électronique d'identité (1) selon l'une des revendications 11 et 12, et au moins un équipement client (3) comprenant des moyens d'acquisition optique (31) pour l'acquisition de ladite image représentant au moins l'élément visuel personnel de l'individu et le code dynamique de vérification visibles sur ledit dispositif électronique d'identité (1).

14. Produit programme d'ordinateur comprenant des instructions de code pour l'exécution d'un procédé selon l'une des revendications 1 à 9 d'authentification d'un dispositif électronique d'identité (1) présenté par un individu, lorsque ledit procédé est exécuté sur un ordinateur.

15. Moyen de stockage lisible par un équipement informatique sur lequel un produit programme d'ordinateur comprend des instructions de code pour l'exécution d'un procédé selon l'une des revendications 1 à 9 d'authentification d'un dispositif électronique d'identité (1) présenté par d'un individu.

## Patentansprüche

1. Verfahren zur Authentifizierung einer elektronischen Identitätsvorrichtung (1), die von einer Person vorgelegt wird, wobei das Verfahren **dadurch gekennzeichnet ist, dass** es die Durchführung der Schritte umfasst:
(b) Empfangen, durch Datenverarbeitungsmittel (21) eines Servers (2), eines aufgenommenen Bildes von der elektronischen Identitätsvorrichtung (1), wobei das Bild mindestens ein persönliches visuelles Element der Person und einen dynamischen Verifizierungscode darstellt, die auf der elektronischen Identitätsvorrichtung (1) sichtbar sind, wobei der dynamische Verifizierungscode mindestens eine Referenzinformation enthält, die für ein erwartetes Erscheinungsbild des visuellen Elements repräsentativ ist, wobei das auf der elektronischen Identitätsvorrichtung (1) sichtbare visuelle Element ein grafisches Element ist, insbesondere eine Fotografie oder eine handschriftliche Signatur der Person, wobei die für ein erwartetes Erscheinungsbild des grafischen Elements repräsentative Referenzinformation eine Sicherheitsangabe vom Typ Digital Photo Seal ist;
(c) Extrahieren, durch Analyse des von den Datenverarbeitungsmitteln (21) des Servers (2) aufgenommenen Bildes:
- einer Kandidateninformation, die für das Erscheinungsbild des visuellen Elements repräsentativ ist, so wie auf dem aufgenommenen Bild darstellt;
- der Referenzinformation, die für das erwartete Erscheinungsbild des visuellen Elements repräsentativ ist, die in dem dynamischen Verifizierungscode enthalten ist, so wie auf dem aufgenommenen Bild dargestellt;
(d) Überprüfen, durch die Datenverarbeitungsmittel (21) des Servers (2), dass die Kandidateninformation und die Referenzinformation, die extrahiert wurden, übereinstimmen.

2. Verfahren nach Anspruch 1, umfassend einen Schritt (a) des Anzeigens des dynamischen Verifizierungscodes durch Anzeigemittel (13) der elektronischen Identitätsvorrichtung (1).

3. Verfahren nach Anspruch 2, wobei der Schritt (a) das vorherige Erzeugen des dynamischen Verifizierungscodes durch Datenverarbeitungsmittel (11) der elektronischen Identitätsvorrichtung (1) in Abhängigkeit von mindestens der repräsentativen Referenzinformation eines erwarteten Erscheinungsbilds des visuellen Elements und ein Einmalpasswort OTP umfasst.

4. Verfahren nach Anspruch 3, wobei der Schritt (a) und der Schritt (c) jeweils die Erzeugung des OTP jeweils durch die Datenverarbeitungsmittel (11) der elektronischen Identitätsvorrichtung (1) und die Datenverarbeitungsmittel (21) des Servers (2) in Abhängigkeit von einem geteilten Geheimnis umfassen.

5. Verfahren nach Anspruch 4, wobei das Einmalpasswort ein zeitbasiertes Einmalpasswort TOTP ist, wobei das Erzeugen des TOTP durch die Datenverarbeitungsmittel (11) der elektronischen Identitätsvorrichtung (1) und die Datenverarbeitungsmittel (21) des Servers (2) ebenfalls von einer Zeitinformation abhängt.

6. Verfahren nach einem der Ansprüche 3 bis 5, wobei der dynamische Verifizierungscode ebenfalls mindestens ein beschreibendes Datenelement des von den Datenverarbeitungsmitteln (11) der elektronischen Identitätsvorrichtung (1) generierten OTP enthält, wobei der Schritt (c) ebenfalls die Extraktion des beschreibenden Datenelements des OTP umfasst, das in dem dynamischen Verifizierungscode enthalten ist, wie in dem aufgenommenen Bild dargestellt, wobei der Schritt (d) ebenfalls die Verifizierung umfasst, dass das von den Datenverarbeitungsmitteln (21) des Servers (2) generierte OTP mit dem extrahierten beschreibenden Datenelement des OTP übereinstimmt.

7. Verfahren nach einem der Ansprüche 2 bis 6, wobei der dynamische Verifizierungscode in Form eines QR-Codes und/oder eines alphanumerischen Codes angezeigt wird.

8. Verfahren nach einem der Ansprüche 1 bis 7, wobei der dynamische Verifizierungscode ebenfalls eine elektronische Signatur der repräsentativen Referenzinformation eines erwarteten Erscheinungsbilds des visuellen Elements enthält, wobei der Schritt (c) ebenfalls die Extraktion der elektronischen Signatur umfasst, die im dynamischen Verifizierungscode enthalten ist, wie in dem aufgenommenen Bild dargestellt, wobei der Schritt (d) ebenfalls die Verifizierung umfasst, dass die extrahierte elektronische Signatur gültig ist.

9. Verfahren nach einem der Ansprüche 1 bis 8, wobei das persönliche visuelle Element der Person auf die elektronische Identitätsvorrichtung (1) gedruckt ist.

10. Authentifizierungsserver (2), **dadurch gekennzeichnet, dass** er Datenverarbeitungsmittel (21) umfasst, die ausgelegt sind, um:
- ein aufgenommenes Bild von einer elektronischen Identitätsvorrichtung (1) zu empfangen, das von einer Person dargestellt wird, wobei das Bild mindestens ein persönliches visuelles Element der Person und einen dynamischen Verifizierungscode darstellt, die auf der elektronischen Identitätsvorrichtung (1) sichtbar sind, wobei der dynamische Verifizierungscode mindestens eine Referenzinformation enthält, die für ein erwartetes Erscheinungsbild des visuellen Elements repräsentativ ist, wobei das auf der elektronischen Identitätsvorrichtung (1) sichtbare visuelle Element ein grafisches Element ist, insbesondere eine Fotografie oder eine handschriftliche Signatur der Person, wobei die für ein erwartetes Erscheinungsbild des grafischen Elements repräsentative Referenzinformation eine Sicherheitsangabe vom Typ Digital Photo Seal ist;
- durch Analyse des aufgenommenen Bildes zu extrahieren:
- eine Kandidateninformation, die für das Erscheinungsbild des visuellen Elements repräsentativ ist, so wie auf dem aufgenommenen Bild darstellt;
- die Referenzinformation, die für das erwartete Erscheinungsbild des visuellen Elements repräsentativ ist, die in dem dynamischen Verifizierungscode enthalten ist, so wie auf dem aufgenommenen Bild dargestellt;
- zu überprüfen, dass die Kandidateninformation und die Referenzinformation, die extrahiert wurden, übereinstimmen.

11. Elektronische Identitätsvorrichtung (1) einer Person, auf der mindestens ein persönliches visuelles Element der Person sichtbar ist, wobei das auf der elektronischen Identitätsvorrichtung (1) sichtbare visuelle Element ein grafisches Element, insbesondere eine Fotografie oder eine handschriftliche Signatur der Person ist, **dadurch gekennzeichnet, dass** sie Datenverarbeitungsmittel (11) umfasst, die ausgelegt sind, um:
- auf Anzeigemitteln (13) einen dynamischen Verifizierungscode zu generieren und anzuzeigen, der mindestens eine Referenzinformation enthält, die für ein erwartetes Erscheinungsbild des visuellen Elements repräsentativ ist, wobei die für ein erwartetes Erscheinungsbild des grafischen Elements repräsentative Referenzinformation eine Sicherheitsangabe vom Typ Digital Photo Seal ist.

12. Vorrichtung nach Anspruch 11, wobei die Datenverarbeitungsmittel (11) ferner ausgelegt sind, um zuvor ein Einmalpasswort OTP zu generieren, wobei der dynamische Verifizierungscode in Abhängigkeit von mindestens der für ein erwartetes Erscheinungsbild des visuellen Elements repräsentativen Referenzinformation und dem generierten OTP generiert wird.

13. Authentifizierungssystem, umfassend einen Authentifizierungsserver (2) nach Anspruch 10, mindestens eine elektronische Identitätsvorrichtung (1) nach einem der Ansprüche 11 und 12 und mindestens eine Client-Ausrüstung (3), die optische Erfassungsmittel (31) für die Erfassung des Bildes umfassen, das mindestens das persönliche visuelle Element der Person und den dynamischen Verifizierungscode darstellt, die auf der elektronischen Identitätsvorrichtung (1) sichtbar sind.

14. Rechnerprogrammprodukt, umfassend Codebefehle für die Ausführung eines Authentifizierungsverfahrens nach einem der Ansprüche 1 bis 9 einer von einer Person vorgelegten elektronischen Identitätsvorrichtung (1), wenn das Verfahren auf einem Rechner ausgeführt wird.

15. Speichermittel, das von einer IT-Ausrüstung lesbar ist, wobei ein Rechnerprogrammprodukt Codebefehle für die Ausführung eines Authentifizierungsverfahrens nach einem der Ansprüche 1 bis 9 einer von einer Person vorgelegten elektronischen Identitätsvorrichtung (1) umfasst.

## Claims

1. A method of authentication of an electronic identity device (1) presented by an individual, the method being **characterized in that** it comprises the implementation of steps of:
(b) Reception by data processing means (21) of a server (2), of an acquired image of said electronic identity device (1), the image representing at least one personal visual element of the individual and a dynamic verification code that are visible on said electronic identity device (1), said dynamic verification code containing at least one item of reference information representative of an expected appearance of said visual element, said visual element visible on said electronic identity device (1) being a graphic element, in particular a photograph or a handwritten signature of the individual, the reference information representative of an expected appearance from said graphic element being Digital Photo Seal type security data;
(c) Extraction by analysis of said acquired image by the data processing means (21) of the server (2) of:
- an item of candidate information representative of the appearance of said visual element as represented in the acquired image;
- the reference information representative of the expected appearance of said visual element contained in said dynamic verification code as represented in the acquired image;
(d) Verification by the data processing means (21) of the server (2) that the extracted item of candidate information and reference information match.

2. The method according to claim 1, comprising a step (a) of displaying by display means (13) said dynamic verification code from said electronic identity device (1) .

3. The method according to claim 2, wherein the step (a) comprises the preliminary generation of said dynamic verification code by data processing means (11) of said electronic identity device (1) based on at least said reference information representative of an expected appearance of said visual element and a one-time password, OTP.

4. The method according to claim 3, wherein the step (a) and the step (c) each comprise the generation of said OTP, respectively by the data processing means (11) of the electronic identity device (1) and the data processing means (21) of the server (2), based on a shared secret.

5. The method according to claim 4, wherein said one-time password is a time-based one-time password, TOTP, the generation of said TOTP by the data processing means (11) of the electronic identity device (1) and the data processing means (21) of the server (2) also being based on time information.

6. The method according to any of claim 3 to 5, wherein said dynamic verification code also contains at least one descriptive data from said OTP generated by the data processing means (11) of the electronic identity device (1), step (c) also comprising the extraction of the descriptive data from said OTP contained in said dynamic verification code as represented in the acquired image, step (d) also comprising the verification that the OTP generated by the data processing means (21) of the server (2) matches said descriptive data of the extracted OTP.

7. The method according to any of claims 2 to 6, wherein said dynamic verification code is displayed in the form of a QR code and/or an alphanumeric code.

8. The method according to any of claims 1 to 7, wherein said dynamic verification code also contains an electronic signature of said reference information representative of an expected appearance of said visual element, step (c) also comprising the extraction of the electronic signature contained in said dynamic verification code as represented in the acquired image, step (d) also comprising the verification that said extracted electronic signature is valid.

9. The method according to any of claims 1 to 8, wherein said personal visual element of the individual is printed on the electronic identity device (1).

10. An authentication server (2), **characterized in that** it comprises data processing means (21) configured for:
- Receiving an acquired image of an electronic identity device (1) presented by an individual, the image representing at least one personal visual element of the individual and a dynamic verification code that are visible on said electronic identity device (1), said dynamic verification code containing at least one item of reference information representative of an expected appearance of said visual element, said visual element visible on said electronic identity device (1) being a graphic element, in particular a photograph or a handwritten signature of the individual, the reference information representative of an expected appearance from said graphic element being Digital Photo Seal type security data;
- Extracting, by analysis of said acquired image:
- an item of candidate information representative of the appearance of said visual element as represented in the acquired image;
- the reference information representative of the expected appearance of said visual element contained in said dynamic verification code as represented in the acquired image;
- Verifying that the extracted candidate information and reference information match.

11. An electronic identity device (1) of an individual on which at least one personal visual element of said individual is visible, said visual element visible on said electronic identity device (1) being a graphic element, in particular a photograph or a handwritten signature of the individual, **characterized in that** it comprises data processing means (11) configured for:
- Generating and displaying on display means (13) a dynamic verification code containing at least one item of reference information representative of an expected appearance of said visual element, the reference information representative of an expected appearance from said graphic element being Digital Photo Seal type security data.

12. The device according to claim 11, wherein the data processing means (11) are further configured for preliminarily generating a one-time password, OTP, said dynamic verification code being generated based on at least said reference information representative of an expected appearance of said visual element and of said generated OTP.

13. An authentication system comprising an authentication server (2) according to claim 10, at least one electronic identity device (1) according to any of claims 11 and 12, and at least one client equipment (3) comprising optical acquisition means (31) for the acquisition of said image representing at least the personal visual element of the individual and the dynamic verification code that are visible on said electronic identity device (1).

14. A computer program product comprising code instructions for the execution of a method according to any of claims 1 to 9 of authenticating an electronic identity device (1) presented by an individual, when said method is executed on a computer.

15. A storage means readable by a computer equipment on which a computer program product comprises code instructions for the execution of a method according to any of claims 1 to 9 of authenticating an electronic identity device (1) presented by an individual.
